# EUROPÄISCHE PATENTANMELDUNG

(11) **EP 4 018 988 A1**
(43) Veröffentlichungstag der Anmeldung: **29.06.2022**
(21) Anmeldenummer: 20216540.3
(22) Anmeldetag: 22.12.2020
(51) Int. Cl.: A61G 5/10, B62B 13/18

(54) **MUSKELKRAFTBETRIEBENES FAHRZEUG**

(71) Anmelder: NICON-TEC GmbH, 7304 Maienfeld (CH)
(72) Erfinder: MAYER, Patrick, 7304 Maienfeld (CH)
(74) Vertreter: Rutz, Andrea

(57) **Zusammenfassung**

Es wird ein Muskelkraftbetriebenes Fahrzeug angegeben, aufweisend ein Fahrgestell (1), einen Fahrsatz (2) mit Rollen (22) sowie ein Bremssystem (5, 6, 7). Der Fahrsatz (2) hat Rollen (22) und ist lösbar am Fahrgestell (1) angebracht oder lösbar am Fahrgestell (1) anbringbar. Er dient zum Rollen des Fahrzeugs auf einer Fahrfläche, um das Fahrzeug fortzubewegen. Das Bremssystem (5, 6, 7) weist zumindest ein Bremselement (7) zum Abbremsen des Fahrzeugs während der Fahrt auf. Das Bremselement (7) ist zum direkten Kontaktieren der Fahrfläche ausgebildet, um dadurch die Fortbewegung des Fahrzeugs abzubremsen.

## Beschreibung

### TECHNISCHES GEBIET

Die vorliegende Erfindung betrifft ein muskelkraftbetriebenes Fahrzeug, welches insbesondere, aber nicht nur für handicapierte Personen, wie zum Beispiel Personen mit Paraplegie, geeignet ist. Der Antrieb erfolgt durch Muskelkraft und beispielsweise mit Hilfe von Stöcken.

### STAND DER TECHNIK

Ein üblicherweise verwendetes und hinlänglich bekanntes Fortbewegungsmittel für Personen mit Paraplegie bzw. Querschnittslähmung stellt der Rollstuhl dar. Der Rollstuhl ermöglicht Mobilität, ist jedoch auf eine ebene und harte Fahrfläche angewiesen. Im Gelände oder auf Eis oder Schnee erweisen sich handelsübliche Rollstühle als schwer manövrierbar, wenn nicht sogar als untauglich.

Während es sich beim üblichen Rollstuhl um ein Mittel zur Sicherstellung der Mobilität im Alltag handelt, sind aber auch vielfältige Sportgeräte für Personen mit Paraplegie bekannt. So gibt es zum Beispiel handangetriebene Liegefahrräder, Sitzskis oder Langlaufschlitten, welche Sport und Spass auf unterschiedlichen Unterlagen erlauben. Üblicherweise ist die Verwendung derartiger Sportgeräte jedoch auf eine einzige Unterlage beschränkt, wie zum Beispiel auf Asphalt oder Schnee.

Die US 8,348,293 B1 offenbart einen Rollstuhl mit austauschbaren Vorderrädern. Anstelle der üblicherweise verwendeten Vorderräder können auch Geländeräder oder Skis angebracht werden, um die Verwendung des Rollstuhls im Gelände bzw. auf Schnee zu verbessern. Da die Hinterräder aber nicht austauschbar sind, bleiben die Verwendungsmöglichkeiten des Rollstuhls beschränkt.

Die FR 3 062 105 A1 offenbart einen steuerbaren Kufenschlitten. Eine Bremse ist vorhanden, welche, wie bei Schlitten üblich, zum Einkrallen in den Schnee ausgebildet ist, um dadurch die Fahrt abzubremsen. Der Kufenschlitten kann nur auf Schnee benutzt werden und ist deshalb hinsichtlich seiner Verwendungsmöglichkeiten eingeschränkt.

In der US 2010/0230915 A1 wird ein Fahrzeug angegeben, das wahlweise auf Schnee, Gras, Wasser, Sand und Eis verwendbar ist. Nicht offenbart ist in diesem Dokument, wie bei diesem Fahrzeug eine Bremse zum Abbremsen der Fahrt realisiert werden soll.

Des Weiteren ist das Fahrzeug "Spike" von Exero Technologies AS, Norwegen bekannt, welches vom Fahrer mit Stöcken angetrieben und mittels Gewichtsverlagerung gesteuert wird. Es handelt sich dabei um ein Sportgerät, das vor allem auf athletische Benutzer ausgerichtet ist. Aufgrund der knienden Position des Fahrers sind eine gewisse Grundstabilität und Kraft im Bereich des Rumpfes zwingend notwendig, um dieses Fahrzeug überhaupt fahren zu können. Aufgrund des vorgegebenen Rädersatzes sind die Verwendungsmöglichkeiten zudem auf asphaltierte Fahrflächen sowie nur wenig ruppige Naturstrassen beschränkt.

Ferner offenbart die US 2009/0058023 A1 einen Stehschlitten, an dessen Fahrgestell anstelle von Skis auch Radeinheiten anbringbar sind, um die Verwendungsmöglichkeiten zu erweitern. Für Personen mit Querschnittslähmung ist dieser Stehschlitten jedoch ungeeignet.

### DARSTELLUNG DER ERFINDUNG

Es ist eine Aufgabe der vorliegenden Erfindung, ein muskelkraftbetriebenes Fahrzeug anzugeben, das mit wenig Umrüstaufwand vielseitig einsetzbar ist. Das Fahrzeug soll dabei bevorzugt, aber nicht nur, zur Verwendung für handicapierte Personen, wie zum Beispiel Personen mit Paraplegie, geeignet sein.

Zur Lösung dieser Aufgabe wird ein Fahrzeug vorgeschlagen, wie es in Anspruch 1 angegeben ist. Vorteilhafte Ausgestaltungen der Erfindung sind in den abhängigen Ansprüchen angegeben.

Die vorliegende Erfindung stellt also ein muskelkraftbetriebenes, insbesondere ein ausschliesslich muskelbetriebenes Fahrzeug zur Verfügung, aufweisend
ein Fahrgestell;
einen Fahrsatz mit Rollen, welcher lösbar am Fahrgestell angebracht oder lösbar am Fahrgestell anbringbar ist, und welcher zum Rollen des Fahrzeugs auf einer Fahrfläche dient, um das Fahrzeug fortzubewegen; sowie
ein Bremssystem mit zumindest einem Bremselement zum Abbremsen des Fahrzeugs während der Fahrt.

Das Bremselement ist dabei zum direkten Kontaktieren der Fahrfläche ausgebildet, um dadurch die Fortbewegung des Fahrzeugs abzubremsen.

Indem dieser (erste) Fahrsatz lösbar am Fahrgestell angebracht ist bzw. lösbar daran anbringbar ist, kann er sehr einfach durch einen anderen (zweiten) Fahrsatz ausgetauscht werden, der anstelle von Rollen zum Beispiel Kufen, Skis oder Geländerollen aufweist, um eine Fortbewegung des Fahrzeugs auf Eis, Schnee oder im Gelände zu ermöglichen. Das Fahrzeug ist dadurch vielseitig einsetzbar. Da das Bremssystem nicht auf die Rollen, sondern auf die Fahrfläche wirkt, ist es vom Fahrsatz unabhängig. Der Austausch der Fahrsätze kann dadurch auf besonders einfache Art und Weise erfolgen. Das Bremssystem ist zudem nicht nur für Fahrsätze verwendbar, die Rollen oder Räder aufweisen, sondern auch für Fahrsätze mit Skis oder Kufen.

Ein direkt auf die Fahrfläche wirkendes Bremssystem ermöglicht aber nicht nur ein besonders einfaches Austauschen der Fahrsätze, sondern ist darüber hinaus einfach herstellbar, was eine Reduktion der Herstellkosten des Fahrzeugs als Ganzes erlaubt. Trotzdem kann das Fahrzeug mit diesem Bremssystem auf effiziente Art und Weise abgebremst werden. Im Vergleich zu anderen, auf die Räder bzw. Rollen wirkenden Bremssystemen, wie zum Beispiel Felgen- oder Scheibenbremsen, besteht nicht das Problem, dass die Bremswirkung auf die meist sehr kleine Kontaktfläche zwischen Räder und Fahrfläche begrenzt ist und sich das Fahrzeug selbst bei blockierten Rädern noch weiterbewegen kann.

Beim Fahrzeug handelt es sich bevorzugt um ein Sport- und/oder Spassgerät, welches insbesondere, aber bevorzugt nicht ausschliesslich, für Personen mit Paraplegie geeignet ist. Bevorzugt ist das Fahrzeug für einen einzelnen Fahrer geeignet, wobei es vorteilhaft an die Grösse des Fahrers anpassbar ist.

Vorteilhaft ist am Fahrgestell ein Sitz für einen Fahrer befestigt. Der Sitz kann einen austauschbaren Fahreraufsatz bilden, so dass das Fahrzeug mittels Anbringen von unterschiedlichen Fahreraufsätzen zum Beispiel an die Grösse des Fahrers, insbesondere an Kinder- und Erwachsenengrösse, an die Schwere der Querschnittslähmung des Fahrers und/oder an dessen bevorzugte Position im Fahrzeug, also z.B. sitzend, liegend oder kniend, anpassbar ist.

Um eine für den Fahrer bequeme Sitzposition zu ermöglichen, welche gleichzeitig ein effizientes Anstossen mit Hilfe der Antriebsstöcke erlaubt, ist der Sitz vorzugsweise in Fahrrichtung nach hinten geneigt. Um das Fahrzeug optimal an den Fahrer anzupassen, ist die Sitzlehne oder sogar der ganze Sitz vorzugsweise bzgl. ihrer bzw. seiner Neigung einstellbar. Das Fahrzeug kann zudem eine Beinstütze aufweisen, um die Beine in einer leicht angewinkelten Lage zu halten.

Bevorzugt ist das Fahrzeug dazu ausgebildet, dass der Fahrer bei bestimmungsgemässer Benutzung darin sitzt und/oder liegt. Das Fahrzeug ist dadurch auch für Personen gut geeignet mit weniger gut ausgebildeter Rumpfmuskulatur. Alternativ oder zusätzlich (z.B. bei austauschbaren Fahreraufsätzen) kann das Fahrzeug auch dazu ausgebildet sein, dass der Fahrer darin kniet.

Am Sitz sind bevorzugt Befestigungsgurte angebracht, um den Fahrer zu sichern, wobei vorteilhaft zumindest einer der Befestigungsgurte zur Sicherung des Oberkörpers des Fahrers dient.

Der Antrieb des Fahrzeugs erfolgt bevorzugt mit Hilfe von Antriebsstöcken, welche der Fahrer in seinen Händen hält, um das Fahrzeug durch Abstossen auf der Fahrfläche fortzubewegen. Die Antriebsstöcke sind ähnlich wie Skistöcke, insbesondere wie Rollerskistöcke, ausgebildet und an die Grösse und insbesondere die Armlänge des Fahrers angepasst. Die Antriebsstöcke können zum Fahrzeug dazugehören und zusammen mit diesem vertrieben werden. Vorteilhaft sind sie teleskopisch bzgl. ihrer Länge anpassbar. Die Antriebsstöcke können verschiedenartige Endaufsätze aufweisen, um sie im Hinblick auf unterschiedliche Fahrflächen umrüsten und anpassen zu können.

Das Fahrgestell umfasst in der Regel eine Grundtragestruktur des Fahrzeugs. Die Grundtragestruktur, welche auch als Chassis bezeichnet werden kann, nimmt bei bestimmungsgemässer Benutzung des Fahrzeugs die Last des Fahrers auf und stützt diese gegenüber dem Fahrsatz ab, welcher direkt oder indirekt am Fahrgestell und insbesondere an der Grundtragestruktur angebracht ist.

Der Fahrsatz bildet die Schnittstelle bzw. den Übergang zwischen Fahrgestell und Fahrfläche. Bevorzugt bildet der Fahrsatz im bestimmungsgemässen Gebrauch des Fahrzeugs und wenn das Bremssystem unbetätigt ist, die einzige Verbindung des Fahrgestells zur Fahrfläche. Das heisst die Fahrfläche wird dann ausser vom Fahrsatz bevorzugt von keinen weiteren Komponenten des Fahrzeugs kontaktiert. Der Fahrsatz trägt dann also das gesamte Gewicht des Fahrers sowie des Fahrgestells.

Bevorzugt weist der Fahrsatz zumindest drei, noch bevorzugter genau vier Fahrsatzeinheiten mit jeweils zumindest einer Rolle auf. Bei zumindest drei Fahrsatzeinheiten kann sichergestellt werden, dass das Fahrzeug auf einer ebenen Fahrfläche auch im Stillstand stabil abgestützt werden kann und somit nicht umkippt. Mit vier Fahrsatzeinheiten ist eine besonders stabile Abstützung möglich. Bevorzugt weist jede der Fahrsatzeinheiten sogar mehrere, insbesondere zwei oder drei Rollen auf, da dadurch besonders gute Fahreigenschaften erreicht werden können. Bei den Rollen handelt es sich bevorzugt um handelsüblich erhältliche Inlineskate-Rollen.

Die Fahrfläche bzw. Fahrbahn kann eine asphaltierte Strasse, aber je nach Fahrsatz auch eine Naturstrasse oder eine Wiese sein. Bevorzugt ist es aber eine feste Fahrfläche, das heisst die Fahrfläche wird zum Beispiel nicht aus Wasser in flüssiger Form gebildet. Falls ein Fahrsatz mit Skis oder Kufen zum Einsatz kommt, kann die Fahrfläche auch schnee- oder eisbedeckt sein. Selbstverständlich ist es auch möglich, verschiedene Fahrsätze, zum Beispiel solche mit Skis und Rollen, miteinander zu kombinieren.

Der Fahrsatz ist dann lösbar am Fahrgestell angebracht bzw. daran anbringbar, wenn er mit einfachen Mitteln, das heisst insbesondere ohne Verwendung von Spezialwerkzeugen, vom Fahrgestell entfernt und z.B. durch einen anderen Fahrsatz ausgetauscht werden kann. Vorteilhaft sind zum Entfernen des Fahrsatzes vom Fahrgestell gar keine Werkzeuge notwendig. Noch vorteilhafter sind auch zum Anbringen des Fahrsatzes am Fahrgestell keine Werkzeuge notwendig. Stattdessen ist der Fahrsatz bevorzugt mit lediglich einfachen Handgriffen vom Fahrgestell lösbar und vorteilhaft auch wieder daran anbringbar.

Das Bremselement ist bevorzugt dazu ausgebildet, mittels Muskelkraft des Fahrers gegen die Fahrbahn gepresst zu werden, um dadurch das Fahrzeug abzubremsen. Das Bremssystem ist vorteilhaft von Hand betätigbar. Je nachdem kann das Bremssystem auch dazu ausgebildet sein, das Fahrzeugs zu steuern, indem zum Beispiel zwei seitlich vom Fahrer angeordnete Bremselemente vorhanden sind, die separat voneinander betätigbar sind. Vorteilhaft ist das Bremselement auswechselbar, so dass je nach Verwendung des Fahrzeugs und in Abhängigkeit der Fahrbahneigenschaften unterschiedlich ausgebildete Bremselemente zum Einsatz kommen können. Bevorzugt weist das Fahrzeug ein Set von mehreren Bremselementen für unterschiedliche Verwendungszwecke des Fahrzeugs auf. Ein solches Set von Bremselementen kann zum Beispiel einen oder mehrere Bremsklötze für Fahrflächen aus Asphalt und/oder Naturstrassen und/oder eine oder mehrere Bremskrallen für Schnee und/oder Eis aufweisen.

Insbesondere falls es als ein Bremsklotz ausgebildet ist, weist das Bremselement vorteilhaft eine vordere, in Fahrtrichtung geneigte Fläche auf. Dadurch kann ein unerwünschtes Einhaken des Bremselements vermieden werden.

Gemäss einer Weiterbildung der Erfindung ist der Fahrsatz mittels einer oder mehreren Schwalbenschwanzverbindungen am Fahrgestell angebracht bzw. anbringbar. Die Schwalbenschwanzverbindung stellt eine einfach lösbare, formschlüssige Verbindung dar, welche einen optimalen Kräftefluss zwischen Fahrgestellt und Fahrsatz und umgekehrt ermöglicht. Bevorzugt weist die Schwalbenschwanzverbindung ein fahrgestellseitiges Kopplungselement auf, welches für das fahrsatzseitige Kopplungselement der Schwalbenschwanzverbindung einen entlang der Fahrtrichtung des Fahrzeugs hinteren Anschlag bildet. Ein unbeabsichtliches Lösen des Fahrsatzes bzw. einer Fahrsatzeinheit während der Fahrt kann dadurch verhindert werden.

Die beiden Kopplungselemente der Schwalbenschwanzverbindung weisen bevorzugt Raststrukturen auf, um ein gegenseitiges Einrasten der Kopplungselemente beim Anbringen des Fahrsatzes an das Fahrgestell zu bewirken und ein unbeabsichtliches Lösen der Verbindung während der Fahrt zu verhindern. Beim gegenseitigen Einrasten der Kopplungselemente erfolgt bevorzugt automatisch eine Verriegelung, so dass der Rasteingriff zum Beispiel durch Überwinden einer gewissen Kraft allein nicht lösbar ist, sondern erst, wenn der Fahrer bzw. Benutzer ein hierfür vorgesehenes Entriegelungselement betätigt.

Gemäss einer bevorzugten Ausführungsform weist das Fahrzeug eine am Fahrgestell befestigte Vorderachse und eine am Fahrgestell befestigte Hinterachse auf und der Fahrsatz ist lösbar an der Vorderachse und/oder an der Hinterachse angebracht bzw. ist lösbar an der Vorderachse und/oder an der Hinterachse anbringbar. Der Fahrsatz kann mehrere, insbesondere vier Fahrsatzeinheiten aufweisen, die an jeweils lösbar einem der Achsenden angebracht bzw. anbringbar sind. Somit sind bei dieser Ausführungsform dieselben Achsen vorteilhaft in Kombination mit unterschiedlichen Fahrsätzen verwendbar.

In einer anderen, ebenfalls bevorzugten Ausführungsform weist der Fahrsatz eine Vorderachse und/oder eine Hinterachse auf, welche lösbar am Fahrgestell angebracht bzw. lösbar am Fahrgestell anbringbar ist. Diese Ausführungsform, bei welcher die Vorder- und/oder Hinterachse einen Teil des Fahrsatzes bildet, hat den Vorteil, dass der Fahrsatz zum Beispiel eine spezifisch für die jeweilige Fahrfläche angepasste Achsfederung aufweisen kann.

Das Fahrzeug weist daher bevorzugt eine oder mehrere Federn auf, um die Rollen federnd am Fahrgestell zu lagern und dadurch bevorzugt eine Steuerung des Fahrzeugs mittels Gewichtsverlagerung zu ermöglichen. Die eine oder mehreren Federn bilden vorteilhaft eine Achsfederung. Um eine Steuerung mittels Gewichtsverlagerung zu ermöglichen, ist die Feder bzw. sind die Federn bevorzugt beabstandet zu einer Längsmittelachse des Fahrzeugs angeordnet.

Das Fahrzeug kann auch einen oder mehrere erste Fahrsätze aufweisen, welche lösbar an der bereits am Fahrgestell befestigten Vorder- und/oder Hinterachse anbringbar sind, sowie einen oder mehrere zweite Fahrsätze, welche selbst eine Vorder- und/oder Hinterachse aufweisen, und mit dieser/diesen lösbar am Fahrgestell anbringbar sind. Die für den einen oder die mehreren ersten Fahrsätze zu verwendenden Achsen sind dann vorteilhaft ebenfalls lösbar am Fahrgestell befestigt, so dass sie von diesem abgenommen werden können, wenn einer der zweiten Fahrsätze verwendet wird. Der eine oder die mehreren ersten Fahrsätze weisen bevorzugt Kufen oder Skis auf, da bei derartigen Fahrsätzen eine Achsfederung auch entfallen und jeweils dieselben, ungefederten Vorder- und Hinterachsen verwendet werden können. Die Achsen können in diesem Fall sogar ganz entfallen, wenn der oder die Fahrsätze zum Beispiel direkt an die Grundtragestruktur anbringbar sind oder zum Beispiel vorne am Fahrzeug nur ein einzelner Ski oder eine einzelne Kufe anzubringen ist. Der eine oder die mehreren zweiten Fahrsätze weisen bevorzugt Rollen auf, da bei Fahrsätzen mit Rollen eine spezifisch an die Fahrfläche angepasste Achsfederung oft erwünscht ist, insbesondere auch um eine Fahrzeugsteuerung mittels Gewichtsverlagerung zu ermöglichen. Bei der Fahrt auf Schnee oder Eis kann die Steuerung zum Beispiel auch über das Bremssystem erfolgen, wenn zum Beispiel zwei vom Fahrer separat betätigbare, seitlich angeordnete Bremselemente vorhanden sind.

Die Vorder- und die Hinterachse sind bevorzugt stillstehend, können bei gewissen Ausführungsformen aber auch mitdrehend sein.

Eine besonders einfache und leichte, aber trotzdem sehr stabile Konstruktion des Fahrzeugs ergibt sich, wenn das Fahrgestell eine aus Hohlprofilen oder, was bevorzugt ist, aus rohrförmigen Komponenten gebildete Grundtragestruktur aufweist.

Die Grundtragestruktur bildet bevorzugt einen im Wesentlichen rechteckigen Rahmen, wobei die die Rollen des Fahrsatzes derart am Fahrgestell angebracht bzw. anbringbar sind, dass sie seitlich zu diesem Rahmen angeordnet sind. Aufgrund der seitlichen Rollenanordnung kann eine stabile Fahrweise erreicht werden.

Das Fahrgestell, insbesondere die Grundtragestruktur, ist vorteilhaft an die Grösse des Fahrers anpassbar ist. Vorzugsweise weist das Fahrgestell und insbesondere die Grundtragestruktur hierzu Komponenten auf, die teleskopisch ineinander verschiebbar sind oder die zum Beispiel mittels Flügelschrauben oder Schnellspannern an verschiedenen Positionen befestigbar sind.

Das Bremssystem kann einen oder zwei Bremsgriffe aufweisen, welche zum Betätigen des zumindest einen Bremselements dienen, um die Fortbewegung des Fahrzeugs abzubremsen. Vorzugsweise ist der bzw. sind die Bremsgriffe seitlich vom Fahrzeugfahrer angeordnet.

Das Bremssystem kann zentral, also symmetrisch zur Längsmittelachse des Fahrzeugs, wirken oder dezentral. Während eine zentrale Bremswirkung lediglich zu einer Geschwindigkeitsverringerung führt, kann eine dezentrale Bremswirkung auch eine Richtungsänderung des Fahrzeugs bewirken und dadurch zur Steuerung dienen. Vorteilhaft ist es, wenn das Bremssystem je nach Verwendungszweck des Fahrzeugs derart anpassbar ist, dass die Bremswirkung zentral oder dezentral erfolgt. Bevorzugt kann dies durch Austausch des bzw. der Bremselemente erreicht werden. So kann das Bremssystem zum Beispiel zweiteilig ausgeführt sein, das heisst mit zwei Bremshebeln jeweils rechts und links zur Längsmittelachse des Fahrzeugs. Für eine dezentrale Bremswirkung kann dann an jedem der beiden Bremshebel jeweils ein Bremselement angebracht sein, so dass die Bremshebel separat voneinander bedienbar sind und dementsprechend via das jeweilige Bremselement eine dezentrale Bremswirkung erzeugbar ist. Für eine zentrale Bremswirkung können die beiden Bremselemente hingegen miteinander verbunden werden oder es kann ein einzelnes, gemeinsames Bremselement angebracht werden, welches die beiden Bremshebel miteinander verbindet.

Bevorzugt sind der oder die Bremsgriffe jeweils in eine die Abbremswirkung aufhebende Richtung federbelastet. Dadurch nimmt das Bremssystem einen definierten Zustand ein, auch wenn es vom Fahrer nicht betätigt wird, oder wenn gar kein Fahrer im Fahrzeug ist.

Um einen einfachen Austausch des oder der Bremselemente zu ermöglichen, weist das Bremssystem bevorzugt eine Bremsmechanik auf, an welcher das zumindest eine Bremselement lösbar angebracht ist.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine perspektivische Ansicht eines Fahrzeugs gemäss einer ersten erfindungsgemässen Ausführungsform, inkl. Antriebsstöcken;
- Fig. 2: eine Ansicht des Fahrzeugs der Fig. 1 von der Seite;
- Fig. 3: eine Ansicht des Fahrzeugs der Fig. 1 von vorne;
- Fig. 4: eine Ansicht des Fahrzeugs der Fig. 1 von hinten;
- Fig. 5: eine Ansicht des Fahrzeugs der Fig. 1 von oben;
- Fig. 6: eine perspektivische Ansicht des Fahrzeugs der Fig. 1, wobei am Fahrgestell ein Fahrsatz mit Kufen, statt wie in der Fig. 1 mit Rollen, angebracht ist;
- Fig. 7: eine perspektivische Ansicht eines Fahrzeugs gemäss einer zweiten erfindungsgemässen Ausführungsform;
- Fig. 8: eine Ansicht des Fahrzeugs der Fig. 7 von der Seite;
- Fig. 9: eine Ansicht des Fahrzeugs der Fig. 7 von vorne;
- Fig. 10: eine Ansicht des Fahrzeugs der Fig. 7 von hinten;
- Fig. 11: eine Ansicht des Fahrzeugs der Fig. 7 von oben;
- Fig. 12: eine perspektivische Ansicht des Fahrzeugs der Fig. 7, mit zwei verschiedenen am Fahrgestell anbringbaren Fahrsätzen;
- Fig. 13: eine Detailansicht des in der Figur 12 gestrichelt umrandeten Ausschnitts mit einem achsseitigen Kopplungselement;
- Fig. 14: eine Detailansicht des in der Figur 12 strichpunktiert umrandeten Ausschnitts mit einem fahrsatzseitigen Kopplungselement;
- Fig. 15: eine perspektivische Ansicht des Fahrzeugs der Fig. 7, wobei am Fahrgestell ein Fahrsatz mit Kufen, statt wie in der Fig. 7 mit Rollen, angebracht ist;
- Fig. 16: eine Ansicht des Fahrzeugs der Fig. 7 von der Seite, wobei das Bremssystem, im Gegensatz zur Fig. 8, durch Weglassen eines Teils des Fahrsatzes sichtbar gemacht und in einem betätigten Zustand ist;
- Fig. 17: eine Detailansicht des in der Figur 8 gestrichelt umrandeten Ausschnitts mit unbetätigtem Bremssystem; sowie
- Fig. 18: eine Detailansicht des in der Figur 16 strichpunktiert umrandeten Ausschnitts mit betätigtem Bremssystem.

### BESCHREIBUNG BEVORZUGTER AUSFÜHRUNGSFORMEN

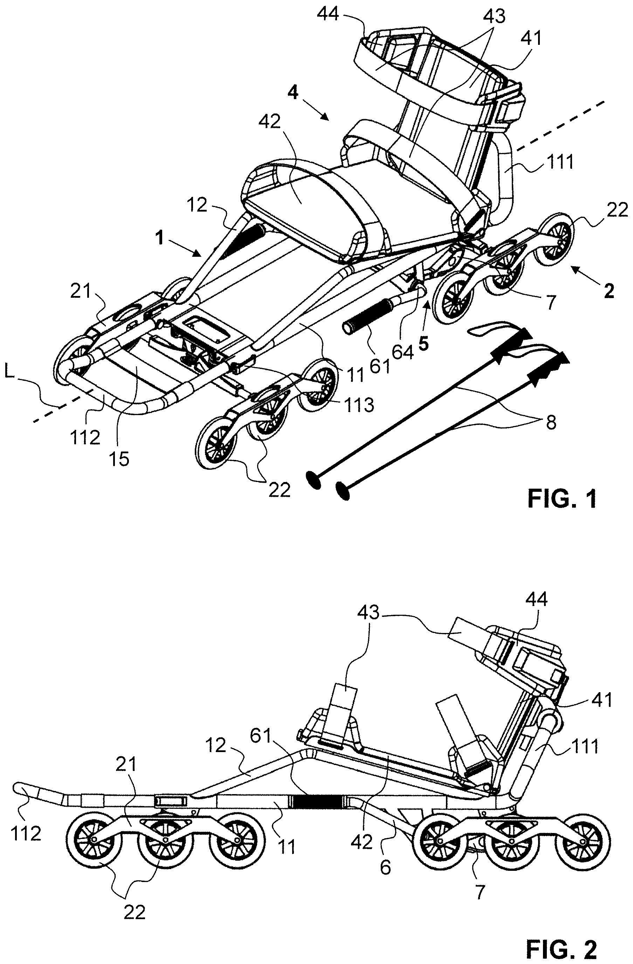

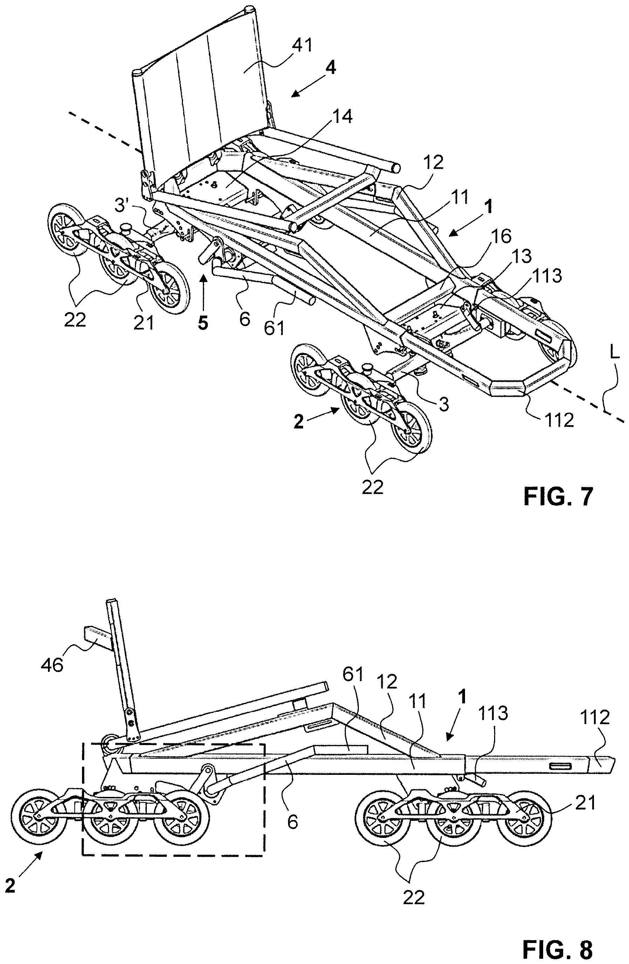

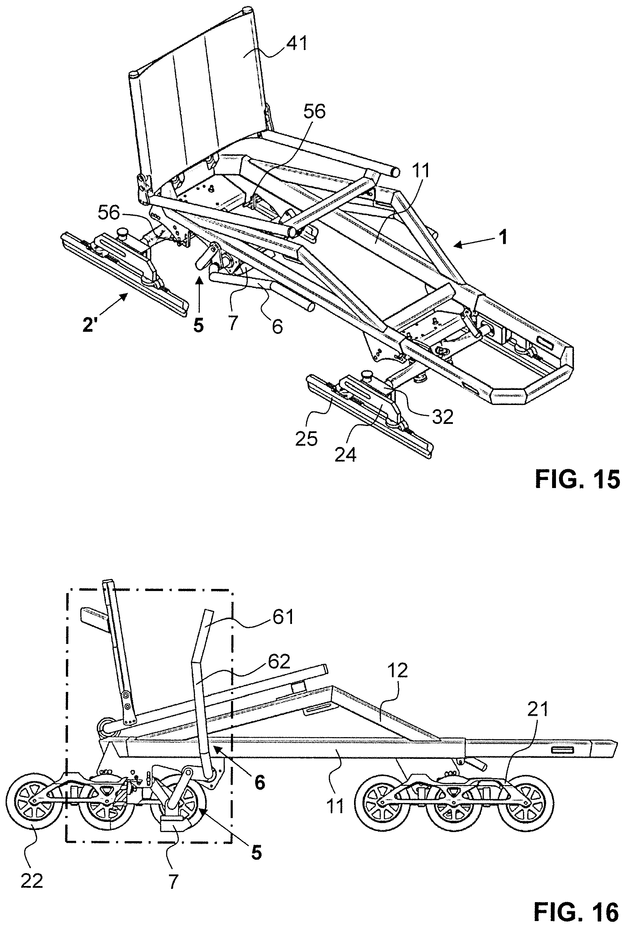

In den Figuren 1 bis 6 ist ein erstes Ausführungsbeispiel und in den Figuren 7 bis 18 ein zweites Ausführungsbeispiel von jeweils einem erfindungsgemässen muskelbetriebenen Fahrzeug gezeigt. Elemente mit gleicher oder ähnlicher Funktion sind in Bezug auf diese beiden unterschiedlichen Ausführungsbeispiele jeweils mit denselben Bezugszeichen versehen.

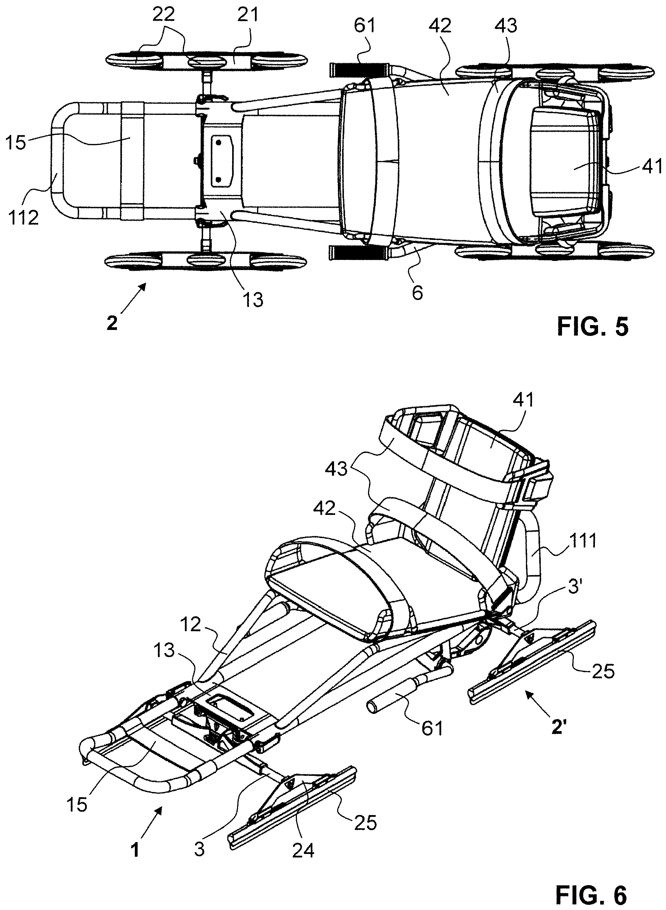

Das in der Figur 1 gezeigte Fahrzeug weist ein Fahrgestell 1 mit einer Grundtragestruktur 11 auf. Die Grundtragestruktur 11 bildet einen Rahmen, der insbesondere in der Ansicht von oben (Figur 5) eine im Wesentlichen rechteckige Form hat. In einem in Fahrtrichtung vorderen Bereich bildet die Grundtragestruktur 11 ein leicht nach oben gebogenes Fussende 112. Im hinteren Bereich ist die Grundtragestruktur 11 stärker nach oben gebogen und bildet dadurch für den Fahrer eine Rückenstütze 111. Die Grundtragestruktur 11 wird aus rohrförmigen Komponenten gebildet und ist dadurch besonders leicht und trotzdem sehr stabil. Die Hauptfahrtrichtung des wird durch eine Längsmittelachse L des Fahrzeugs vorgegeben.

Im vorderen Bereich der Grundtragestruktur 11 ist das Fussende 112 teleskopisch in die seitlichen Rahmenelemente der Grundtragestruktur 11 einschiebbar und mittels Schnellspannern 113 in einer gewünschten Position fixierbar. Das Fahrgestell 1 und die Grundtragestruktur 11 sind dadurch an die Grösse und insbesondere die Beinlänge des Fahrers anpassbar.

Auf der Oberseite der Grundtragestruktur 11 ist eine Beinstütze 12 angebracht, welche einen Teil des Fahrgestells 1 bildet und einen Fahrersitz 4 trägt. Wie insbesondere in der Figur 2 gut erkennbar ist, bildet die Beinstütze 12 mit den seitlichen Rahmenelementen der Grundtragestruktur 11 auf beiden Seiten des Fahrzeugs jeweils ein sich nach oben hin erstreckendes Dreieck. In der Ansicht von oben (Figur 5) erstrecken sich die von der Beinstütze 12 gebildeten Dreiecke jeweils leicht seitlich nach aussen hin. Die Beinstütze 12 halten die Beide des Fahrers während der Fahrt in einer ergonomischen, leicht angewinkelten Lage.

Im vorderen Bereich der Grundtragestruktur 11 ist die Beinstütze 12 auf beiden Seiten jeweils an einem vorderen Achsträger 13 angebracht, der sich quer zur Grundtragestruktur 11 erstreckt und deren seitliche Rahmenelemente verbindet. Im hinteren Bereich der Grundtragestruktur 11 ist die Beinstütze 12 analog dazu beidseitig an einem hinteren Achsträger 14 angebracht, der sich ebenfalls quer zur Grundtragestruktur 11 erstreckt und deren seitliche Rahmenelemente verbindet.

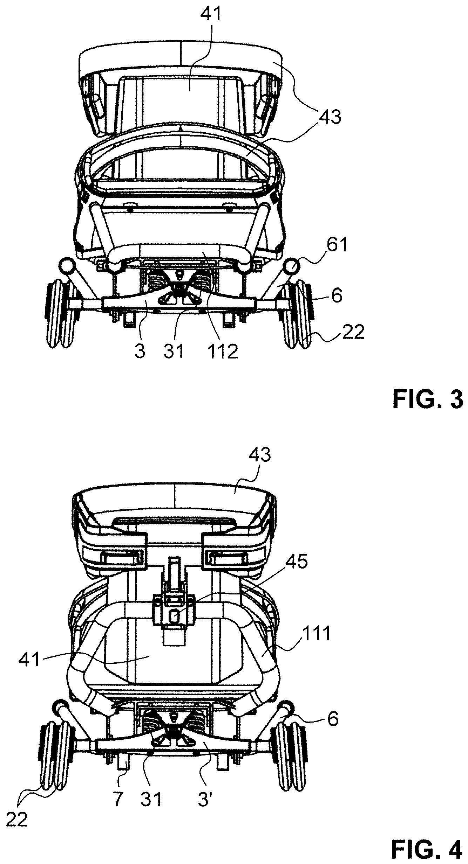

Im hinteren Bereich der Beinstütze 12 ist auf deren Oberseite der Fahrersitz 4 befestigt. Dabei liegt der Fahrersitz 4 mit einer Sitzfläche 42 auf der Beinstütze 12 auf und mit einer Lehne 41 an der Rückenstütze 111 der Grundtragestruktur 111 an. Eine Sitzbefestigung 45 zum Befestigen des Fahrersitzes 4 an der Rückenstütze 111 ist in der Figur 4 erkennbar. Um das Fahrzeug an den Fahrer anzupassen, können verschiedenartige und/oder unterschiedliche grosse Fahrersitze vorhanden sein, welche am Fahrgestell 1 angebracht werden können. Aufgrund seiner Auflage auf dem hinteren, schräg ausgebildeten Bereich der Beinstütze 12, ist der Fahrersitz 4 insgesamt leicht nach hinten geneigt, wodurch sich für den Fahrer eine besonders bequeme Sitzposition ergibt, welche gleichzeitig ein effizientes Anstossen mit Hilfe von Antriebsstöcken 8 erlaubt. Der Fortbewegungsantrieb erfolgt somit ausschliesslich mittels Muskelkraft und mit Hilfe der vom Fahrer in den Händen gehaltenen Antriebsstöcke 8. Indem sich der Fahrer mit den Antriebsstöcken 8 nach hinten auf der Fahrunterlage abstösst, versetzt er das Fahrzeug in eine Bewegung nach vorne.

Am Fahrersitz 4 angebracht sind mehrere Befestigungsgurte 43, welche zur Sicherung und stabilen Positionierung des Fahrers im Fahrersitz 4 dienen. Die Befestigungsgurte 43 sind an Seitenstützen 44 angebracht, welche dem Fahrer zusätzliche seitliche Stabilität geben und zudem die Steuerung des Fahrzeugs mittels Verlagerung des Körpergewichts erleichtern. Im vorderen Bereich des Fahrgestells 1 ist eine Fussauflage 15 vorgesehen, welche zum Abstellen der Füsse des Fahrers dient.

An der Unterseite des vorderen Achsträgers 13 ist eine Vorderachse 3 und an der Unterseite des hinteren Achsträgers 14 eine Hinterachse 3' angebracht. Die Vorderachse 3 und die Hinterachse 3' sind jeweils feststehend, das heisst sie drehen sich während der Fahrt nicht. Allerdings sind die Achsen 3, 3' bei Überwindung einer entgegenwirkenden Achsfederung 31 geringfügig seitlich zur Grundtragestruktur 11 hin schwenkbar. Das Fahrgestell 1 mit dem darauf angebrachten Fahrersitz 4 kann somit durch Gewichtsverlagerung des Fahrers während der Fahrt in beide Richtungen leicht seitlich zur Fahrfläche hin geneigt werden. Dies ermöglicht eine Steuerung des Fahrzeugs mittels Gewichtsverlagerung. Ausserdem bewirkt die vordere und hintere Achsfederung 31 eine Absorption von Schlägen während der Fahrt.

An den Enden der Achsen 3, 3' ist jeweils eine Rollenhalterung 21 mit drehbar darin gelagerten Rollen 22 lösbar angebracht. Im vorliegenden Ausführungsbeispiel weist jeder der Rollenhalterungen 21 jeweils drei Rollen 22 auf. Die vier Rollenhalterungen 21 mit den darin gelagerten Rollen 22 bilden gemeinsam einen Fahrsatz 2 des Fahrzeugs. Wie in den Figuren 3 und 4 gut erkennbar ist, sind die Rollen 22 von unten nach oben jeweils leicht nach innen geneigt, wodurch die Fahrstabilität des Fahrzeugs erhöht wird. Bei den Rollen 22 kann es sich insbesondere um handelsübliche Inlineskate-Rollen handeln.

Zum Abbremsen des Fahrzeugs während der Fahrt ist eine Bremse vorgesehen, welche vom Fahrer mittels beidseitig zum Fahrersitz 4 angeordneter Bremsgriffe 61 bedienbar ist. Die Bremsgriffe 61 bilden jeweils das Ende eines Bremshebels 6, der mit einer unterhalb des Fahrersitzes 4 angeordneten Bremsmechanik 5 verbunden ist. An der Bremsmechanik 5 sind zwei Bremsklötze 7 angebracht, welche zur direkten Kontaktierung der Fahrfläche bei Betätigung der Bremse ausgebildet sind, um dadurch das Fahrzeug abzubremsen. Im vorliegenden Ausführungsbeispiel sind die Bremsgriffe 61 und die Bremsklötze 7 starr miteinander verbunden und um ein dazwischen angeordnetes Hebelgelenk 64 drehbar. Das Bremssystem bildet so einen mechanischen Hebel, bei dem die Drehachse durch das Hebelgelenk 64 gebildet wird. Ein Ziehen der Bremsgriffe 61 nach oben (z.B. in der Ansicht der Fig. 2) führt dadurch zu einem Absenken der Bremsklötze 7 nach unten zur Fahrfläche hin. Da der Hebelarm auf der Seite der Bremsgriffe 61 länger ist als auf der Seite der Bremsklötze 7, wird die Anpresskraft der Bremsklötze 7 gegen die Fahrfläche erhöht, so dass bei verhältnismässig wenig Kraftaufwand dennoch eine gute Bremswirkung erzielt werden kann. Via eine entlang der Drehachse des Hebelsystems angeordnete Verbindungsstange sind die beiden Bremsklötze 7 (sowie die Bremshebel 6) fest miteinander verbunden und können nur gemeinsam abgesenkt bzw. angehoben werden. Zum Bremsen des Fahrzeugs zieht der Fahrer also einen oder beide Bremsgriffe 61 nach oben, um dadurch die unter dem Fahrersitz 4 angeordneten Bremsklötze 7 auf die Fahrfläche zu pressen und eine entsprechende Reibungskraft zu erzeugen.

Die Figur 6 zeigt dasselbe Fahrzeug wie in den Figuren 1 bis 5, jedoch mit einem anderen an der Vorderachse 3 und an der Hinterachse 3' angebrachten Fahrsatz 2'. Der hier am Fahrgestell 1 angebrachte Fahrsatz 2' weist anstatt Rollen Kufen 25 auf, die an einer Kufenhalterung 24 befestigt sind. Genauso wie der Fahrsatz 2 ist auch der Fahrsatz 2' lösbar an der Vorder- und Hinterachse 3, 3' und somit am Fahrgestell 1 angebracht. Durch Austauschen der Fahrsätze 2, 2' ist das Fahrzeug also einfach für unterschiedliche Verwendungszwecke umrüstbar. Während der Fahrsatz 2 mit den Rollen 22 zum Fahren auf Asphaltstrassen ausgelegt ist, eignet sich der Fahrsatz 2' mit den Kufen 25 insbesondere für Fahrten auf Eis. Um das Abstossen auf den jeweiligen Fahrflächen zu optimieren, können beim Umrüsten jeweils auch die Antriebsstöcke 8 ausgewechselt werden oder es können an den Enden der Antriebsstöcke 8 jeweils Aufsätze angebracht werden, die speziell für die jeweilige Fahrfläche geeignet sind.

Weitere Fahrsätze sind selbstverständlich möglich, wie zum Beispiel Fahrsätze mit Skis oder Geländerollen, um das Fahrzeug auf Schnee oder im Gelände einsetzen zu können.

In einem alternativen Ausführungsbeispiel könnten die Vorderachse 3 und die Hinterachse 3' auch einen Teil des Fahrsatzes bilden, das heisst gemeinsam mit z.B. den Rollen 22 oder den Kufen 25 vom Fahrgestell 1 abnehmbar sein. Dies hätte den Vorteil, dass der Fahrsatz dann nur zwei separate Einheiten aufweisen würde, also zum Beispiel einen vorderen und einen hinteren Kufensatz, jeweils inklusive die Achse 3 bzw. 3'. Ein weiterer Vorteil bei einer solchen Ausführung ist, dass die Achsfederung 31 jeweils an den Fahrsatz und somit die dafür vorgesehene Fahrfläche angepasst sein kann. So kann beispielsweise bei Fahrsätzen mit Rollen eine weitere Achsfederung 31 vorgesehen werden und bei Fahrsätzen mit Skis oder Kufen eine erheblich härtere oder gar keine Federung. Auch Mischformen sind möglich, also zum Beispiel verschiedene Sets von lösbar anbringbaren Achsen mit jeweils unterschiedlichen Federungen sowie lösbar an die Achsen anbringbare Fahrsätze mit unterschiedlichen Rollen, Skis, Kufen etc.

Da die Bremsklötze 7 zum direkten Kontaktieren der Fahrfläche ausgebildet sind, um dadurch die Bremswirkung zu erzielen, muss beim Umrüsten der Fahrsätze am Bremssystem grundsätzlich nichts geändert werden. Allenfalls könnten die eher für Asphalt geeigneten Bremsklötze 7 jedoch durch Bremskrallen ersetzt werden, welche besser zum Abbremsen auf Eis geeignet sind. Bevorzugt sind die Bremselemente, also z.B. die Bremsklötze 7 oder die Bremskrallen, daher einfach lösbar an der Bremsmechanik 5 angebracht.

Um eine Steuerung des Fahrzeugs nicht nur mittels Gewichtsverlagerung, sondern alternativ oder zusätzlich auch mit Hilfe der Bremsgriffe 61 zu ermöglichen, kann die Verbindung der Bremselemente gelöst werden. Im vorliegenden Fall müsste also die im Bereich des Hebelgelenks 64 angeordnete Verbindungsstange, welche die beiden Bremshebel 6 miteinander verbindet, entfernt oder unterbrochen werden. Auf diese Weise kann sehr einfach von einem zentralen Bremssystem, welches zentral bzgl. der Längsmittelachse L wirkt, zu einem dezentralen Bremssystem umgestellt werden, bei dem die beiden beabstandet zur Längsmittelachse L angeordneten Bremselemente unabhängig voneinander bedienbar sind. Insbesondere beim Einsatz auf Eis oder Schnee ist eine derartige dezentrale Steuerung mit den Bremshebeln 6 vorteilhaft.

In den Figuren 7 bis 18 ist ein zweites Ausführungsbeispiel eines erfindungsgemässen, ausschliesslich muskelkraftbetriebenen Fahrzeugs gezeigt. Das Ausführungsbeispiel der Figuren 7 bis 18 weist viele Gemeinsamkeiten und Ähnlichkeiten mit demjenigen der Figuren 1 bis 6 auf und wird deshalb nachfolgend hauptsächlich anhand der Unterschiede beschrieben.

Das Fahrgestell 1 und insbesondere die Grundtragestruktur 11 werden beim Ausführungsbeispiel der Figuren 7 bis 18 aus Hohlprofilen gebildet, welche eine im Querschnitt eckige Form aufweisen. Die Grundtragestruktur 11 weist eine rechteckige, insgesamt flache Form auf. Der Fahrersitz 4 ist am hinteren Ende der Grundtragestruktur 11 sowie an der Beinstütze 12 angebracht. Aus darstellerischen Gründen ist in den Figuren 7 bis 18 jeweils nur die Lehne 41, nicht jedoch die Sitzfläche gezeigt. An der Rückseite der Lehne 41 ist ein Schiebebügel 46 angebracht, um das Fahrzeug z.B. beim Verstauen einfacher stossen und ziehen zu können. Eine in den Figuren nicht gezeigte Fussauflage kann ähnlich wie beim Ausführungsbeispiel der Figuren 1 bis 6 vorgesehen sein, oder durch eine Querstrebe 16 der Grundtragestruktur 11 gebildet sein. Die Querstrebe 16, von welcher auch mehrere vorhanden sein können, kann auch lediglich zur Verstärkung und Versteifung der Grundtragestruktur 11 dienen.

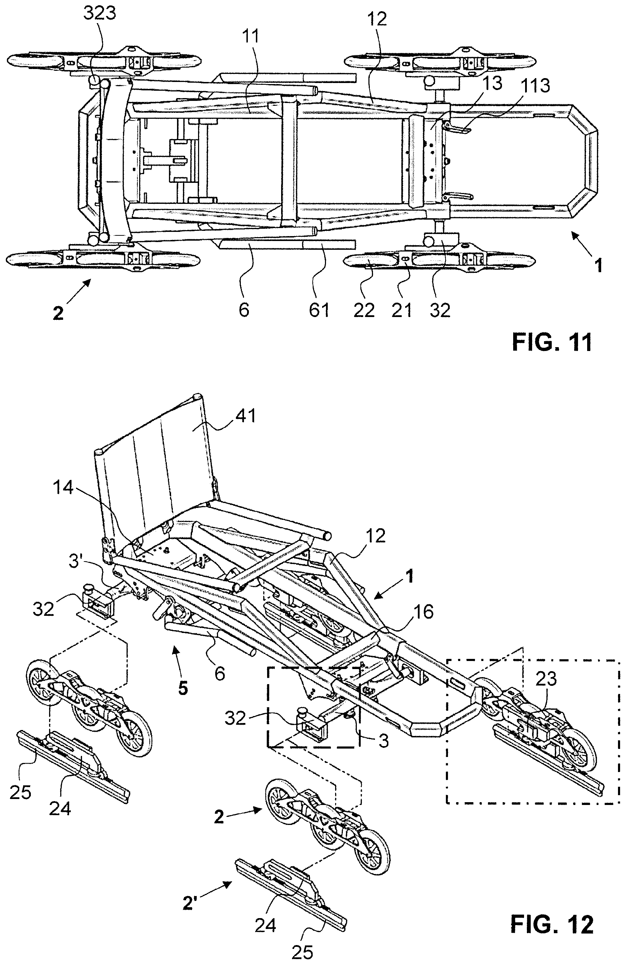

In der Figur 12 ist das Fahrzeug mit zwei unterschiedlichen, lösbar an das Fahrgestell 1 anbringbaren Fahrsätzen 2 und 2' gezeigt. Während der Fahrsatz 2 vier Einheiten mit jeweils drei in einer gemeinsamen Rollenhalterung 21 gehaltenen Rollen 2 aufweist, weist der Fahrsatz 2' vier Kufen 25 auf, die in jeweils einer Kufenhalterung 24 befestigt sind.

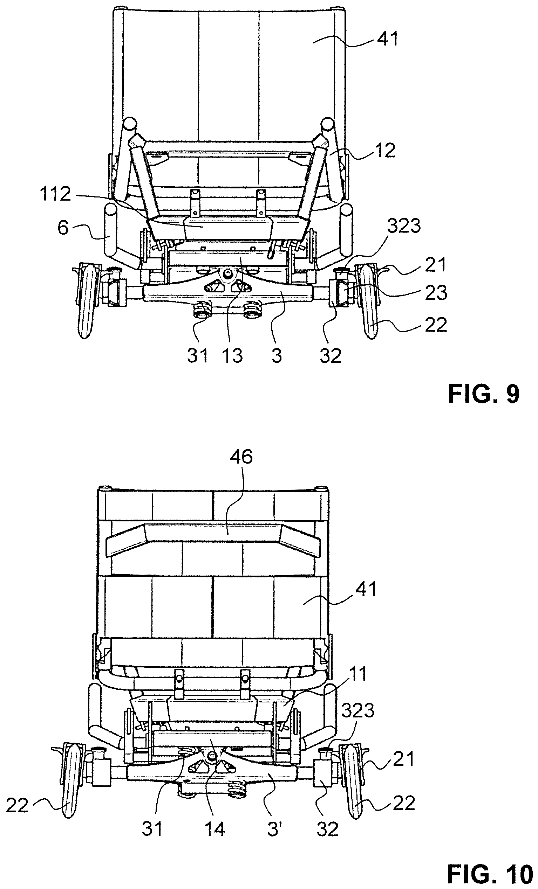

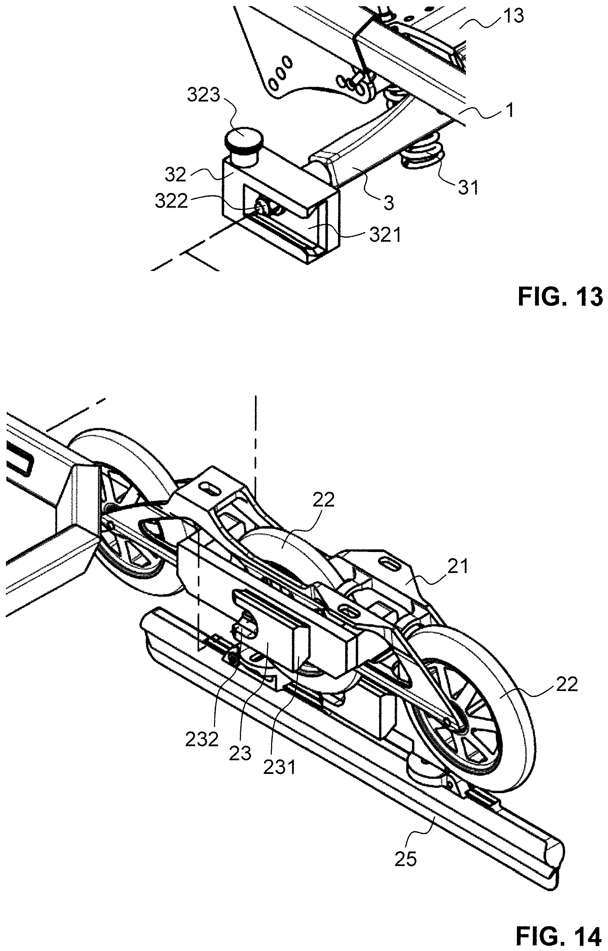

In den Figuren 13 und 14 wird im Detail gezeigt, wie die beiden Fahrsätze 2 und 2' lösbar an der Vorderachse 3 und der Hinterachse 3' anbringbar sind: An den Achsenden ist jeweils ein achsseitiges Kopplungselement 32 befestigt, das eine im Querschnitt trapezförmige Nut 321 aufweist, die in Hauptfahrtrichtung nach vorne hin offen ist. An den Rollenhalterungen 21 sowie an den Kufenhalterungen 24 ist jeweils ein fahrsatzseitiges Kopplungselement 23 vorgesehen, welches als komplementäres Gegenstück zur Nut 321 einen im Querschnitt trapezförmigen Nutenstein 231 aufweist. Der Nutenstein 231 ist zum Einschieben von vorne her in die Nut 321 des achsseitigen Kopplungselements 32 ausgebildet, um die jeweilige Rollen- oder Kufeneinheit des Fahrsatzes 2 bzw. 2' lösbar an der Vorder- bzw. Hinterachse 3, 3' anzubringen. Die durch die Nut 321 und den Nutenstein 231 somit gebildete Schwalbenschwanzverbindung ist in der Figur 9 erkennbar.

In ihrem in Fahrtrichtung hinteren Bereich sind die Nuten 321 der achsseitigen Kopplungselemente 32 jeweils geschlossen, das heisst sie bilden für den Nutenstein 213 einen hinteren Anschlag. Ein unbeabsichtliches Lösen einer Fahrsatzeinheit während der Fahrt in Hauptfahrtrichtung wird dadurch verhindert.

Als weitere Sicherung gegen ein unbeabsichtliches Lösen weist das fahrsatzseitige Kopplungselement 23 im Nutenstein 231 jeweils eine nach hinten hin offene, ungefähr halbkreisförmige Aussparung 232 auf, welche zum Umgreifen und Einrasten in einen Rastnocken 322 ausgebildet ist, der im hinteren Bereich in der Nut 321 des achsseitigen Kopplungselements vorgesehen ist. Das gegenseitige Einrasten von Rastnocken 322 und Aussparung 232 beim Anbringen des Fahrsatzes 2, 2' erfolgt derart, dass die beiden Komponenten miteinander verriegelt sind, das heisst nicht ohne Weiteres voneinander gelöst werden können. Ein unbeabsichtliches Lösen einer Fahrsatzeinheit vom Fahrgestell 1 wird dadurch verunmöglicht. Um den Fahrsatz 2, 2 vom Fahrgestell 1 abzunehmen, muss der Benutzer ein am achsseitigen Kopplungselement 32 vorgesehenes Betätigungselement 323 betätigen, wodurch der Rastnocken 322 ausser Eingriff mit der Aussparung 232 gebracht wird und der Nutenstein 231 aus der Nut 231 herausgezogen werden kann.

Selbstverständlich sind auch andere Möglichkeiten denkbar, um den Fahrsatz 2 bzw. 2' lösbar an den Achsen 3, 3' anzubringen und in der daran angebrachten Position zu verriegeln. So könnten zum Beispiel auch zum lösbaren Anbringen und/oder Verriegeln Schnellspanner oder Flügelmuttern eingesetzt werden. Auch Bajonet-, Klemm- oder andere Verbindungen sind denkbar. Ein lösbares Anbringen mittels Schwalbenschwanzverbindung wäre auch für die Vorder- und Hinterachse 3, 3' am Fahrgestell 1 möglich.

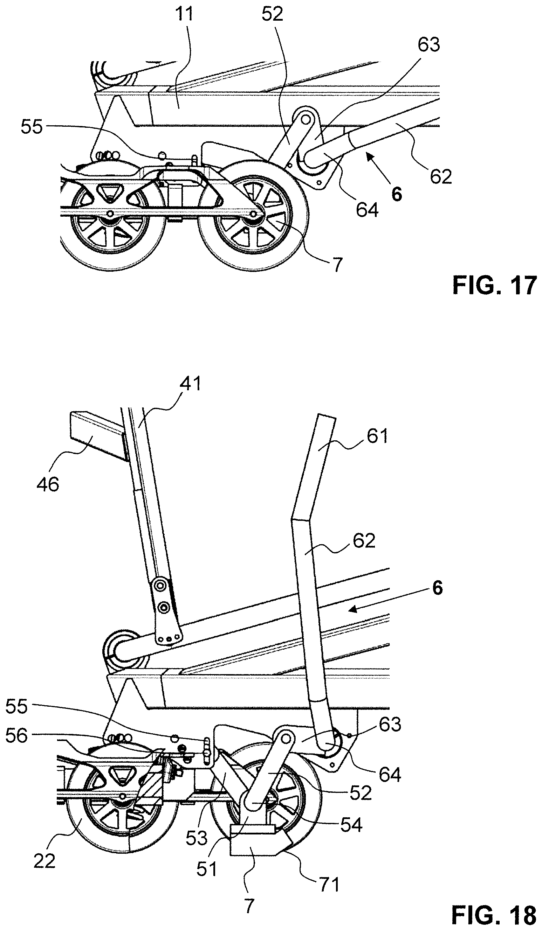

Das Bremssystem des vorliegenden Ausführungsbeispiels eines erfindungsgemässen Fahrzeuges ist in den Figuren 17 und 18 gut erkennbar: In der Figur 17 ist die Bremse in unbetätigtem Zustand gezeigt und in Figur 18 in betätigtem Zustand. Im betätigten Zustand werden die seitlich angeordneten Bremshebel 6 an den Bremsgriffen 61 hochgezogen, um den unterhalb der Grundtragestruktur 11 und unterhalb des Fahrersitzes 4 angeordnete Bremsklotz 7 auf die Fahrfläche abzusenken. Auch hier kann wahlweise und in Abhängigkeit vom Verwendungszweck ein zentral oder dezentral wirkendes Bremssystem vorgesehen sein. Bei einem zentral wirkenden Bremssystem kann das Bremselement insbesondere durch einen einzigen Bremsklotz oder eine einzige Bremskralle gebildet sein, welcher bzw. welche die linke und die rechte Seite der Bremsmechanik 5 miteinander verbindet. Im Falle eines dezentral wirkenden Bremssystems könnten auf der linken und der rechten Seite der Bremsmechanik 5 separate und nicht miteinander verbundene Bremsklötze bzw. Bremskrallen eingesetzt werden.

Wie aus den Figuren 17 und 18 ersichtlich ist, weist der Bremshebel 6 jeweils einen ersten Hebelarm 62 mit dem Bremsgriff 61 sowie einen zweiten Hebelarm 63 auf, der sich in einem Winkel von ungefähr 90° zum ersten Hebelarm 62 erstreckt. Die beiden Hebelarme 62 und 63 sind im Hebelgelenk 64, um welches der Hebel 6 drehbar am Fahrgestell 1 angebracht ist, miteinander verbunden. Der erste Hebelarm 62 ist um ein Vielfaches länger ausgebildet als der zweite Hebelarm 63.

Die Bremsmechanik 5 ist via ein Drehgelenk mit dem freien Ende des zweiten Hebelarms 63 verbunden. Hierzu ist ein erstes Aufhängungssegment 52 drehbar am zweiten Hebelarm 63 angebracht. Ein zweites Aufhängungssegment 53 ist auf ungefähr derselben Höhe wie das Hebelgelenk 64, jedoch weiter hinten frei drehbar am Fahrgestell 1 angebracht. Die beiden Aufhängungssegmente 52 und 53 sind in einem Aufhängungsgelenk 54 miteinander verbunden und tragen dort gemeinsam eine Bremselementhalterung 51, an deren Unterseite ein Bremselement in Form eines Bremsklotzes 7 oder einer Bremskralle angebracht ist.

Bei einem Hochziehen des Bremsgriffs 61 durch den Fahrer, dreht sich somit der zweite Hebelarm 63 des Bremshebels 6 nach unten, wodurch der am ersten und zweiten Aufhängungssegment 52, 53 angebrachte Bremsklotz 7 nach unten zur Fahrfläche hin bewegt wird. Die gemeinsame Aufhängung an den Aufhängungssegmenten 52, 53 kann derart sein, dass sich der Bremsklotz 7 immer in einer horizontalen Lage befindet. Um die Bremswirkung zu verbessern, kann das zweite Aufhängungssegment 53 an einer Führungsstange 56 angebracht und mit dieser verschiebbar in einem Langloch 55 gelagert sein, welches sich in vertikaler Richtung erstreckt.

Um beim Bremsen ein Einhaken des Bremsklotzes 7 in der Fahrfläche zu vermeiden, weist dieser bevorzugt eine vordere, bzgl. der Fahrfläche geneigte Fläche 71 auf.

Selbstverständlich ist die hier beschriebene Erfindung nicht auf die erwähnten Ausführungsbeispiele beschränkt und eine Vielzahl von Abwandlungen ist möglich. So muss der Antrieb zum Beispiel nicht zwingend mit Stöcken erfolgen. Auch ein Handantrieb, ähnlich wie Handbikes, wäre denkbar. Mit Hilfe des Handantriebs würde dann eine mitdrehende Antriebsachse angetrieben werden. Möglich sind auch Ausführungsformen, welche nicht für Paraplegiker geeignet sind, und beispielsweise Fusspedale für den Antrieb oder eine mit den Füssen zu betätigendes Bremssystem aufweisen. Des Weiteren könnte in anderen Ausführungsformen zum Beispiel die Grundtragestruktur gänzlich anders ausgestaltet sein und beispielsweise durch eine Platte gebildet werden. Anstelle von drei Rollen 22 pro Fahrsatzeinheit bzw. pro Rollenhalterung 21 könnte eine beliebige andere Anzahl von Rollen vorgesehen sein. Die verschiedenen Elemente der in den Figuren 1 bis 18 gezeigten Ausführungsbeispiele können zudem selbstverständlich beliebig miteinander kombiniert werden. Eine Vielzahl weiterer Abwandlungen ist denkbar.

### BEZUGSZEICHENLISTE

| | | | |
|---|---|---|---|
| 1 | Fahrgestell | 4 | Fahrersitz |
| 11 | Grundtragestruktur | 41 | Lehne |
| 111 | Rückenstütze | 42 | Sitzfläche |
| 112 | Fussende | 43 | Befestigungsgurt |
| 113 | Schnellspanner | 44 | Seiten stütze |
| 12 | Beinstütze | 45 | Sitzbefestigung |
| 13 | Vorderer Achsträger | 46 | Schiebebügel |
| 14 | Hinterer Achsträger | | |
| 15 | Fussauflage | 5 | Bremsmechanik |
| 16 | Querstrebe | 51 | Bremselementhalterung |
| | | 52 | Erstes Aufhängungssegment |
| 2, 2' | Fahrsatz | 53 | Zweites |
| 21 | Rollenhalterung | | Aufhängungssegment |
| 22 | Rolle | 54 | Aufhängungsgelenk |
| 23 | Fahrsatzseitiges | 55 | Langloch |
| | Kopplungselement | 56 | Führungsstange |
| 231 | Nutenstein | | |
| 232 | Aussparung | 6 | Bremshebel |
| 24 | Kufenhalterung | 61 | Bremsgriff |
| 25 | Kufe | 62 | Erster Hebelarm |
| | | 63 | Zweiter Hebelarm |
| 3 | Vorderachse | 64 | Hebelgelenk |
| 3' | Hinterachse | | |
| 31 | Achsfederung | 7 | Bremsklotz |
| 32 | Achsseitiges Kopplungselement | 71 | Geneigte Fläche |
| 321 | Nut | 8 | Antriebsstöcke |
| 322 | Rastnocken | | |
| 323 | Entriegelungselement | L | Längsmittelachse |

## Patentansprüche

1. Muskelkraftbetriebenes Fahrzeug, aufweisend
ein Fahrgestell (1);
einen Fahrsatz (2) mit Rollen (22), welcher lösbar am Fahrgestell (1) angebracht oder lösbar am Fahrgestell (1) anbringbar ist, und welcher zum Rollen des Fahrzeugs auf einer Fahrfläche dient, um das Fahrzeug fortzubewegen; sowie
ein Bremssystem (5, 6, 7) mit zumindest einem Bremselement (7) zum Abbremsen des Fahrzeugs während der Fahrt,
**dadurch gekennzeichnet, dass**
das Bremselement (7) zum direkten Kontaktieren der Fahrfläche ausgebildet ist, um dadurch die Fortbewegung des Fahrzeugs abzubremsen.

2. Fahrzeug nach Anspruch 2, wobei das Fahrzeug einen weiteren lösbar am Fahrgestell (1) anbringbaren oder daran angebrachten Fahrsatz (2) aufweist, wobei dieser weitere Fahrsatz (2) Kufen (25), Skis oder Geländerollen aufweist, um eine Fortbewegung des Fahrzeugs auf Eis, Schnee oder im Gelände zu ermöglichen.

3. Fahrzeug nach Anspruch 1 oder 2, ausserdem aufweisend ein Paar von Antriebsstöcken (8), um das Fahrzeug in Bewegung zu versetzen und anzutreiben.

4. Fahrzeug nach einem der vorhergehenden Ansprüche, wobei der Fahrsatz (2) mittels einer oder mehreren Schwalbenschwanzverbindungen (231, 321) am Fahrgestell (1) angebracht bzw. anbringbar ist.

5. Fahrzeug nach einem der vorhergehenden Ansprüche, ausserdem aufweisend eine am Fahrgestell (1) befestigte Vorderachse (3) und eine am Fahrgestell (1) befestigte Hinterachse (3'), wobei der Fahrsatz (2) lösbar an der Vorderachse (3) und/oder an der Hinterachse (3') angebracht ist bzw. lösbar an der Vorderachse (3) und/oder an der Hinterachse (3') anbringbar ist.

6. Fahrzeug nach einem der Ansprüche 1 bis 4, wobei der Fahrsatz (2) eine Vorderachse (3) und/oder eine Hinterachse (3') aufweist, weiche lösbar am Fahrgestell (1) angebracht bzw. lösbar am Fahrgestell (1) anbringbar ist.

7. Fahrzeug nach einem der vorhergehenden Ansprüche, wobei das Fahrzeug eine oder mehrere Federn (31) aufweist, um die Rollen (22) federnd am Fahrgestell (1) zu lagern und dadurch bevorzugt eine Steuerung des Fahrzeugs mittels Gewichtsverlagerung zu ermöglichen.

8. Fahrzeug nach einem der vorhergehenden Ansprüche, wobei das Fahrgestell (1) eine aus Hohlprofilen oder aus rohrförmigen Komponenten gebildete Grundtragestruktur (11) aufweist.

9. Fahrzeug nach Anspruch 8, wobei die Grundtragestruktur (11) einen im Wesentlichen rechteckigen Rahmen bildet, und wobei die die Rollen (22) des Fahrsatzes (2) derart am Fahrgestell (1) angebracht bzw. anbringbar sind, dass sie seitlich zu diesem Rahmen angeordnet sind.

10. Fahrzeug nach Anspruch 8 oder 9, wobei das Fahrgestell (1), insbesondere die Grundtragestruktur (11), an die Grösse des Fahrers anpassbar ist.

11. Fahrzeug nach einem der vorhergehenden Ansprüche, wobei das Bremssystem (5, 6, 7) einen oder zwei Bremsgriffe (61) aufweist, welche zum Betätigen des Bremselements (7) dienen, um die Fortbewegung des Fahrzeugs abzubremsen, und welche vorzugsweise seitlich vom Fahrer des Fahrzeugs angeordnet sind.

12. Fahrzeug nach einem der vorhergehenden Ansprüche, wobei der oder die Bremsgriffe (61) jeweils in eine die Abbremswirkung aufhebende Richtung federbelastet sind.

13. Fahrzeug nach einem der vorhergehenden Ansprüche, wobei das Bremssystem (5, 6, 7) eine Bremsmechanik (5) aufweist, an welcher das zumindest eine Bremselement (7) lösbar angebracht ist.

14. Fahrzeug nach einem der vorhergehenden Ansprüche, wobei am Fahrgestell (1) ein Sitz (4) für einen Fahrer befestigt ist, und wobei der Sitz (4) vorzugsweise in Fahrrichtung nach hinten geneigt ist.

15. Fahrzeug nach Anspruch 14, wobei am Sitz (4) Befestigungsgurte (43) angebracht sind, um den Fahrer zu sichern, wobei bevorzugt zumindest einer der Befestigungsgurte (43) zur Sicherung des Oberkörpers des Fahrers dient.
